(19) Europäisches Patentamt
European Patent Office
Office européen des brevets

(11) **EP 0 555 493 B1**

(12) **EUROPEAN PATENT SPECIFICATION**

(45) Date of publication and mention
of the grant of the patent:
**03.12.1997 Bulletin 1997/49**

(21) Application number: **92918906.6**

(22) Date of filing: **03.09.1992**

(51) Int Cl.6: **G01F 1/60**, G01F 1/00,
G01F 25/00, G01F 1/58

(86) International application number:
**PCT/JP92/01124**

(87) International publication number:
**WO 93/05368 (18.03.1993 Gazette 1993/08)**

(54) **ELECTROMAGNETIC FLOW METER FOR WATER IN NOT-FULL STATE**

MAGNETISCH-INDUKTIVER DURCHFLUSSMESSER FÜR WASSERFREISPIEGELLEITUNG

DEBIMETRE ELECTROMAGNETIQUE POUR CANALISATION D'EAU A MOITIE PLEINE

(84) Designated Contracting States:
**CH DE FR GB LI**

(30) Priority: **03.09.1991 JP 222940/91**

(43) Date of publication of application:
**18.08.1993 Bulletin 1993/33**

(73) Proprietor: **Aichi Tokei Denki Co., Ltd.
Nagoya-shi Aichi-Ken 456-91 (JP)**

(72) Inventor: **YOSHIDA, Yutaka Room 604, Fuji Haitsu
Kaniecho, Ama-gun Aichi 497 (JP)**

(74) Representative:
**Blanco White, Henry Nicholas et al
ABEL & IMRAY
Northumberland House
303-306 High Holborn
London WC1V 7LH (GB)**

(56) References cited:
**JP-A- 636 420          JP-A- 5 223 605
JP-A- 5 248 356        JP-U-62 114 317
US-A- 3 991 612**

• **PATENT ABSTRACTS OF JAPAN, vol. 14, no. 76
(P-1005) 13 February 1990; & JP-A-12 92 214**
• **PATENT ABSTRACTS OF JAPAN, vol. 9, no. 109
(P-355) 14 May 1985; & JP-A-59 230 115**

## Description

The present invention relates to an electromagnetic flow meter for measuring the rate of flow of fluid in a conduit that is not full.

JP-A-59-230115 describes such an apparatus in which coils are arranged above and below a conduit and are excited alternately to judge on the basis of the respective outputs whether the conduit is full.

A configuration in which coils arranged in upper and lower portions of a conduit are connected in series is seen in JP-A 52-48356.

The applicant of the present invention has proposed an electromagnetic flow meter for measuring the rate of flow which is flowing in a conduit in a not-full state on the basis of the theory of electromagnetic flow meter in Japanese Patent Application No. Hei 3-5631. The above proposal was laid open on 31 st August 1993, after the publication of the present application, in JP-A 5-223605).

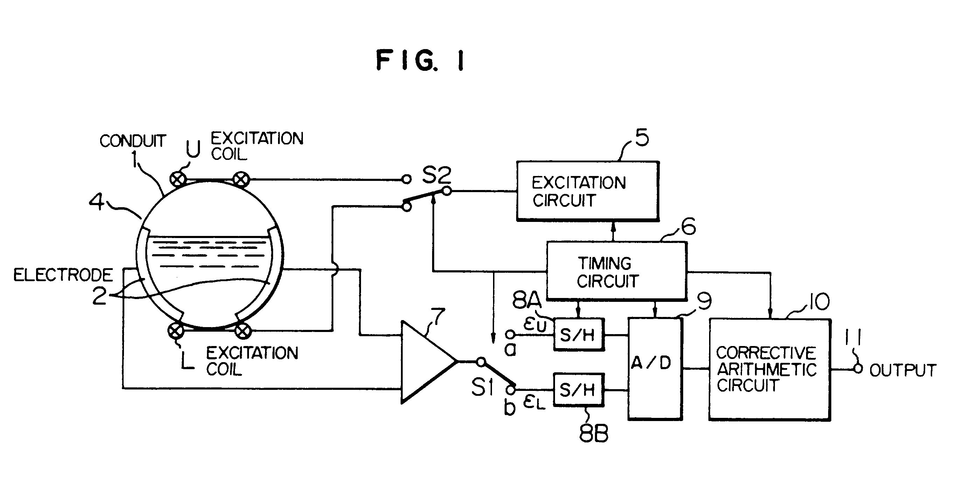

The proposed technique has such a configuration as shown in Fig. 1.

The reference numeral 1 designates a conduit which is circular in section; 2, 2 designate a pair of electrodes which are disposed at laterally symmetrical positions with respect to a vertical line passing the center of the conduit 1; and U and L designate flux coils which are respectively provided at the upper and lower sides of the conduit 1 so as to be excited alternately to produce spatially different and uneven flux distributions in different periods. The reference numeral 4 designates a flow detector having such a structure as mentioned above.

The reference numeral 5 designates an excitation circuit for alternately exciting the upper and lower excitation coils U and L on the basis of a signal of a timing circuit 6. The reference numeral 7 designates an amplifier for amplifying a voltage induced between the pair of electrodes 2, 2 to form an output voltage, and S1 designates a changeover switch which operates on the basis of the signal of the timing circuit 6. The changeover switch S1 operates in synchronism with a changeover switch S2 which serves to change the excitation period of the two excitation coils U and L, so that the changeover switch S1 is turned to the $\underline{a}$ side when the upper excitation coil U is excited and the changeover switch S1 is turned to the $\underline{b}$ side when the lower excitation coil L is excited.

The reference numerals 8A and 8B designate sample & hold circuits which are supplied with output voltages $\varepsilon_U$ and $\varepsilon_L$ from the $\underline{a}$ and $\underline{b}$ contacts of the changeover switch S1 so as to sample-hold the voltages $\varepsilon_U$ and $\varepsilon_L$ respectively; 9 designates an A/D conversion circuit for converting analog signals given from the sample & hold circuits 8A and 8B into digital signals respectively; 10 designates a corrective arithmetic circuit having a program for performing a corrective arithmetic operation; and 11 designates an output terminal for outputting a flow rate signal as a result of the arithmetic operation.

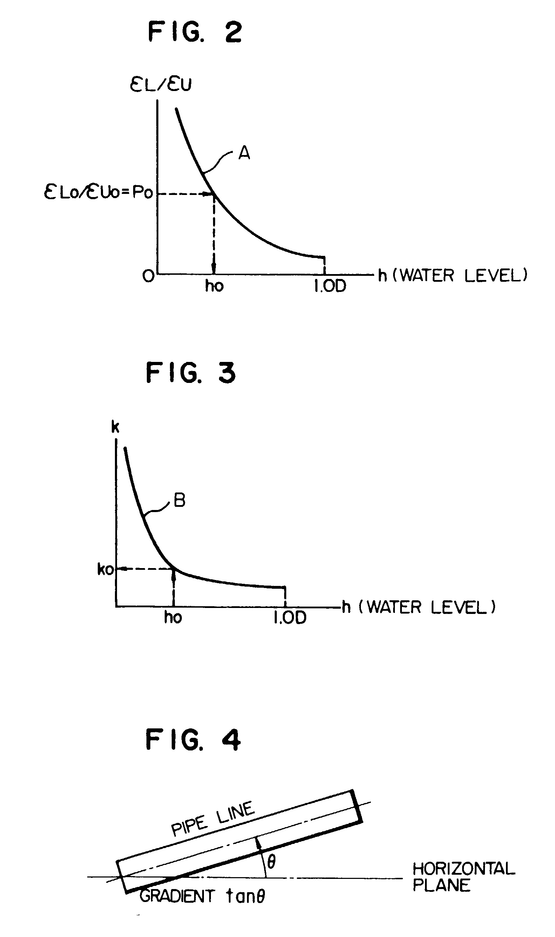

The ratio $\varepsilon_L/\varepsilon_U$ between the output voltages $\varepsilon_U$ and $\varepsilon_L$ from the amplifier 1 has a fixed relationship to the water level $\underline{h}$. When the water level $\underline{h}$ and the ratio $\varepsilon_L/\varepsilon_U$ are respectively taken as the abscissa and ordinate as shown in Fig. 2, one curve A showing the relation between the two is obtained.

The ratio $\varepsilon_U/Q$ between the output voltage $\varepsilon_U$ and the real flow rate Q indicates the sensitivity of the flow meter. When the sensitivity is represented by $\underline{k}$, the water level $\underline{h}$ and the sensitivity $\underline{k}$ have a functional relation expressed by a curve B shown in Fig. 3. The relation between the water level $\underline{h}$ and the sensitivity $\underline{k}$ is independent of the gradient of the conduit.

In Figs. 2 and 3, the water level $\underline{h}$ as the abscissa is expressed by the ratio of the real water level to the diameter (inner diameter) D of the conduit 1. The curves A and B are preliminarily calculated by measuring the output ratio $\varepsilon_L/\varepsilon_U$ and the sensitivity $\underline{k}$ while changing the water level $\underline{h}$ in a range of from 0 to 1.0D in the condition where the conduit 1 is merely attached to a pipe line while being fixed at a suitable gradient tanΘ as shown in Fig. 4.

Then, the flow detector 4 is connected to a pipe line where the flow rate is to be measured. If, in this condition, the output ratio $\varepsilon_{L0}/\varepsilon_{U0}$ thus measured is equal to $P_0$, then the water level $h_0$ can be found from the curve A in Fig. 2. Further, the sensitivity $k_0$ under the condition that the water level is $h_0$ can be found from the curve B in Fig. 3, so that the true flow rate $Q_0$ can be calculated as:

$$Q_0 = \varepsilon_{U0}/k_0 \qquad (1)$$

by the corrective arithmetic circuit 10. This is the gist of the above-mentioned previously-filed patent application.

In the background technique, the curve A in Fig. 2 has been considered to be independent of the pipe line gradient tanΘ.

The inventors of the present invention have made eager researches to improve the background technique to thereby improve measurement accuracy. As a result, however, the following fact has been found.

That is, when the pipe line gradient changes actually, the flow rate distribution changes delicately because the average flow rate changes though the water level may be constant. Accordingly, the curves in Figs. 2 and 3 are respectively shifted according to the change of the pipe line gradient as shown in Figs. 5 and 6. This shifting is the cause of measurement error.

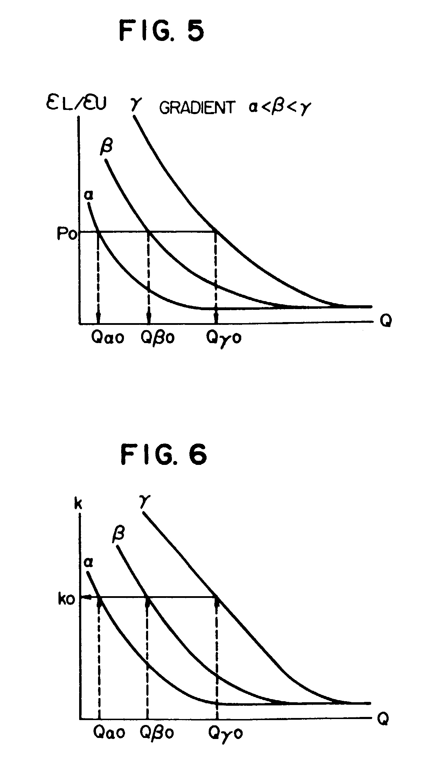

The water level $\underline{h}$ has no role but a role as an inclusion term for calculating the sensitivity $\underline{k}$ on the basis of the output ratio $\varepsilon_L/\varepsilon_U$. Further, at any given pipe line gradient, the water level $\underline{h}$ and the flow rate Q have one-to-one correspondence with each other. Accordingly, in each of Figs. 5 and 6, the abscissa is replaced by the flow rate Q at the gradient used in the measurement.

That is, when the abscissa is plotted by the flow rate Q as shown in Figs. 5 and 6, not only the curve indicating the relation between the flow rate Q and the output ratio $\varepsilon_L/\varepsilon_U$ is shifted laterally correspondingly to the gradients $\alpha$, $\beta$ and $\gamma$ as shown in Fig. 5 but the curve indicating the relation between the flow rate Q and the sensitivity k is shifted laterally as shown in Fig. 6.

Relation between pipe line gradient and flow rate.

It is now assumed that the pipe line gradient $\rho$ is unknown. Further assuming that the output ratio $\varepsilon_L/\varepsilon_U$ at this time is $P_0$, first the flow quantities $Q\alpha_0$, $Q\beta_0$ and $Q\gamma_0$ are determined by using a group of curves having $\alpha$, $\beta$ and $\gamma$ as parameters in Fig. 5. Each of the flow quantities $Q\alpha_0$, $Q\beta_0$ and $Q\gamma_0$ indicates that "if the gradient is $\alpha$ ($\beta$ or $\gamma$), the current flow rate $Q_0$ shows the same water level as that of the flow rate $Q\alpha_0$ ($Q\beta_0$ or $Q\gamma_0$)".

Accordingly, it is a matter of course that the following relations are established.

$$\text{If } \rho=\alpha, \text{ then } Q_0=Q\alpha_0.$$

$$\text{If } \rho=\beta, \text{ then } Q_0=Q\beta_0.$$

$$\text{If } \rho=\gamma, \text{ then } Q_0=Q\gamma_0.$$

Because the gradient $\rho$ is however unknown now, the real flow rate $Q_0$ is obtained by performing the arithmetic calculation of $\varepsilon_{U0}/k_0$ through the corrective arithmetic circuit 10 after calculating the sensitivity $\underline{k}_0$ from the curves in Fig. 6 with $Q\alpha_0$, $Q\beta_0$ and $Q\gamma_0$ as inclusion terms.

The thus obtained relations between $Q_0$ and $Q\alpha_0$, $Q\beta_0$ and $Q\gamma_0$ are as follows.

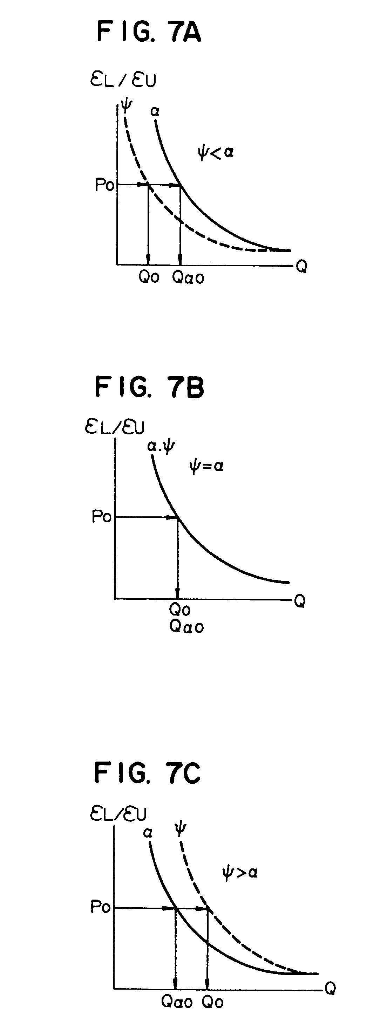

$$\text{If } \rho<\alpha, \text{ then } Q_0<Q\alpha_0; \qquad \text{Fig. 7A}$$

$$\text{If } \rho=\alpha, \text{ then } Q_0=Q\alpha_0; \qquad \text{Fig. 7B}$$

$$\text{If } \rho>\alpha, \text{ then } Q_0>Q\alpha_0. \qquad \text{Fig. 7C}$$

Similarly, the following relations are established.

$$\text{If } \rho<\beta, \text{ then } Q_0<Q\beta_0;$$

$$\text{If } \rho=\beta, \text{ then } Q_0=Q;$$

$$\text{If } \rho>\beta, \text{ then } Q_0>Q\beta_0; \text{ and so on.}$$

Accordingly, if data corresponding to Figs. 5 and 6 are taken at various gradients $\alpha$, $\beta$, $\gamma$, $\delta$ ... sufficiently finely spaced and over a sufficient range so that $Q\alpha_0$, $Q\beta_0$, $Q\gamma_0$, $Q\delta_0$, ... can be compared with $Q_0$ as shown in Figs. 7A, 7B, and 7C, the currently unknown gradient $\rho$ can be known to a corresponding accuracy.

An object of the present invention is to provide a highly accurate electromagnetic flow meter for a fluid not completely filling a conduit.

The invention provides an electromagnetic flowmeter for measuring flow rate of a fluid not completely filling a conduit, comprising: coils mounted above and below the measuring conduit for generating a magnetic field across the conduit; means for selectively energising the upper coil or the lower coil; sensor means comprising a pair of electrodes arranged to sense the induced voltage across the conduit caused by the passage of the fluid through the magnetic field; and processing means comprising means arranged:

(a) to store a first relationship determined in advance between a ratio **P** of the outputs of the sensor means when the upper and lower coils are respectively energised and the flow rate **Q** of the fluid, for each of a plurality of known gradients;
(b) to store a second relationship determined in advance between the sensitivity **k**, defined as a ratio of the output of the sensor means when the upper coil is energised to the flow rate **Q** in the conduit, and the flow rate **Q**, for each of the plurality of known gradients;
(c) to receive signals $\varepsilon_{U0}$, $\varepsilon_{L0}$ from the sensor means;
(d) to calculate from the received signals $\varepsilon_{U0}$ and $\varepsilon_{L0}$ and the stored first and second relationships the actual gradient of the conduit; and
(e) to calculate a flow rate by using the calculated gradient in the stored relationships.

The invention also provides a method of measuring flow rate of a fluid not completely filling a conduit, using an electromagnetic flowmeter comprising: coils mounted above and below the measuring conduit for generating a magnetic field across the conduit; means for selectively energising the upper coil or the lower coil; sensor means comprising a pair of electrodes arranged to sense the induced voltage across the conduit caused by the passage of the fluid through the magnetic field; the method comprising the steps of:

(a) storing a first relationship determined in advance between a ratio **P** of the outputs of the sensor means when the upper and lower coils are respectively energised and the flow rate **Q** of the fluid, for each of a plurality of known gradients;

(b) storing a second relationship determined in advance between the sensitivity **k**, defined as a ratio of the output of the sensor means when the upper coil is energised to the flow rate **Q** in the conduit, and the flow rate **Q**, for each of the plurality of known gradients;

(c) receiving signals $\varepsilon_{U0}$, $\varepsilon_{L0}$ from the sensor means;

(d) calculating from the received signals $\varepsilon_{U0}$ and $\varepsilon_{L0}$ and the stored first and second relationships the actual gradient of the conduit; and

(e) calculating a flow rate by using the calculated gradient in the stored relationships.

Because the corrective arithmetic operation can be performed by using curves corresponding to Fig. 5 and 6 measured at gradients most closely approximating to the current gradient $\rho$ (unknown), the current gradient $\rho$ can be found by the method described above.

For example, $Q\alpha_0$ and $Q\beta_0$ are first obtained by using curves corresponding to Figs. 5 and 6 measured at gradient $\alpha$.

If $\rho=\alpha$, $Q_0$ is not equal to the true real flow rate. The relation in size between $\rho$ and $\alpha$ and the relation in size between $Q_0$ and $Q\alpha_0$ are however equal to each other as follows:

If $\rho<\alpha$, then $Q_0<Q\alpha_0$;

If $\rho=\alpha$, then $Q_0=Q\alpha_0$; and

If $\rho>\alpha$, then $Q_0>Q\alpha_0$.

Accordingly, the current gradient $\rho$ can be found by the method described above.

More in detail, relations with respect to suitable gradients $\alpha$ and $\beta$ are selected from the relations (curves) of Figs. 5 and 6 preliminarily measured at various gradients. This selection is performed arbitrarily by an operator. As another method, $\alpha$ and $\beta$ may be fixed. Alternatively, $\alpha$ and $\beta$ which have been measured preliminarily may be used directly.

Provisional real flow quantities $Q_0'$ and $Q_0''$ are calculated on the basis of the equation (1) described above. using the thus selected two curves. $Q_0'$ and $Q_0''$ are preliminarily measured at gradients $\alpha$ and $\beta$. The provisional real flow quantities $Q_0'$ and $Q_0''$ have been considered as real flow quantities in the above-mentioned Japanese Patent Application No. Hei-3-5631. It is a matter of course that the provisional real flow quantities are very approximate compared to the true value (real flow rate).

In this specification, the provisional real flow quantities $Q_0'$ and $Q_0''$ are calculated. The true gradient $\rho$ is calculated by using the provisional real flow quantities

$Q_0'$ and $Q_0''$ and the flow quantities $Q\alpha_0$ and $Q\beta_0$ obtained from Fig. 5.

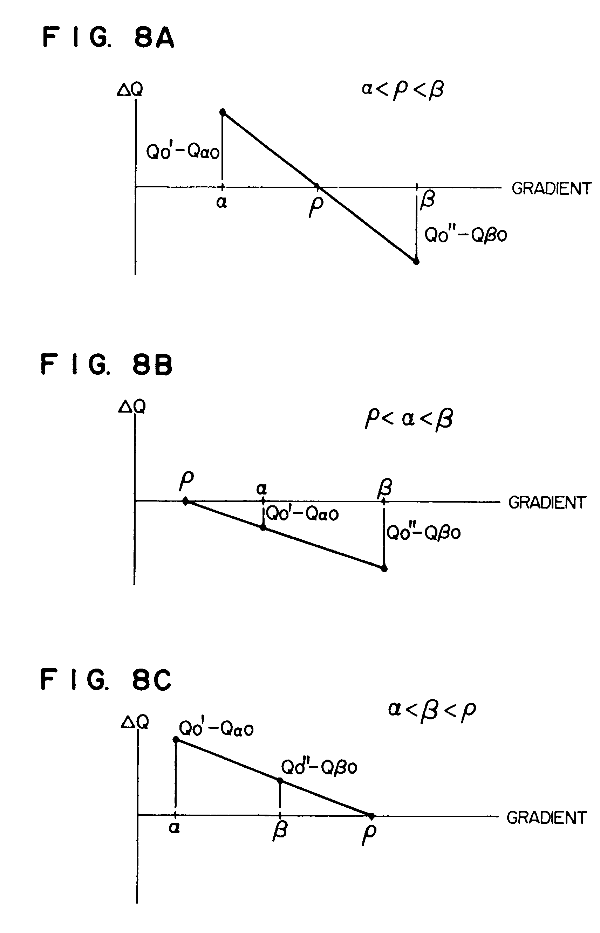

When the relations between the true gradient $\rho$ and the selected gradients $\alpha$ and $\beta$ are $\rho<\alpha<\beta$, the relation shown in Fig. 8A is obtained.

Similarly, in the case of $\rho<\alpha<\beta$, the relation shown in Fig. 8B is obtained, and, in the case of $\alpha<\beta<\rho$, the relation shown in Fig. 8C is obtained.

The relations shown in the respective drawings are expressed by the equation:

$$\rho = \frac{Q\beta_0-Q_0''}{Q\beta_0-Q\alpha_0+Q_0'-Q_0''}\alpha + \frac{Q_0'-Q\alpha_0}{Q\beta_0-Q\alpha_0+Q_0'-Q_0''}\beta \ (2)$$

When the gradient $\rho$ becomes known as described above, an exact errorless flow rate is calculated by performing a corrective arithmetic operation by using curves measured at a gradient most nearly approximate to the gradient $\rho$ or by using suitable curves obtained by interpolation/extrapolation from the measured curves.

BRIEF DESCRIPTION OF DRAWINGS

Fig. 1 is a block diagram of a previously proposed electromagnetic flow meter for water in a not-full state;

Fig. 2 is a graph of the water level versus the output ratio;

Fig. 3 is a graph of the water level versus the sensitivity;

Fig. 4 is a schematic view for explaining the pipe line gradient;

Fig. 5 is a graph of the flow rate versus the output;

Fig. 6 is a graph of the flow rate versus the sensitivity;

Figs. 7A through 7C are graphs of the flow rate versus the sensitivity ratio showing different relations in size between the measured gradient $\rho$ and a gradient $\alpha$ for which data have been preliminarily stored;

Fig. 8A is a graph showing the relation between the gradient in the case of $\alpha<\rho<\beta$ and the flow rate difference $\Delta Q$;

Fig. 8B is a graph showing the relation between the gradient in the case of $\rho<\alpha<\beta$ and the flow rate difference $\Delta Q$;

Fig. 8C is a graph showing the relation between the gradient in the case of $\alpha<\beta<\rho$ and the flow rate difference $\Delta Q$;

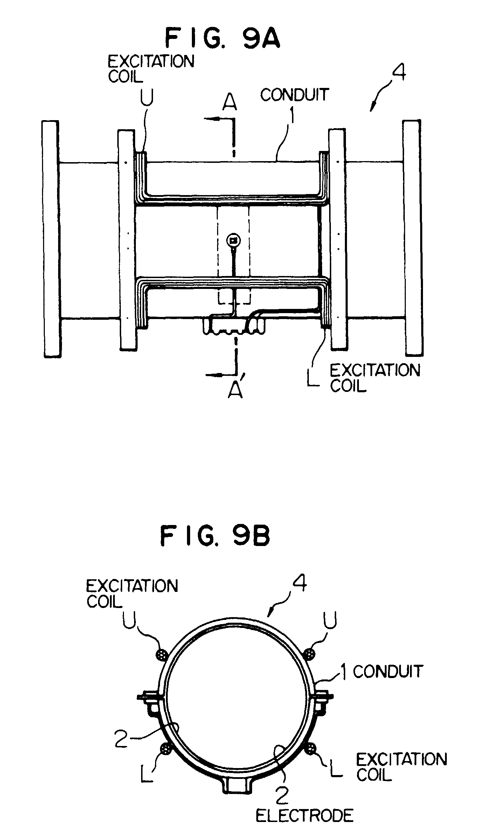

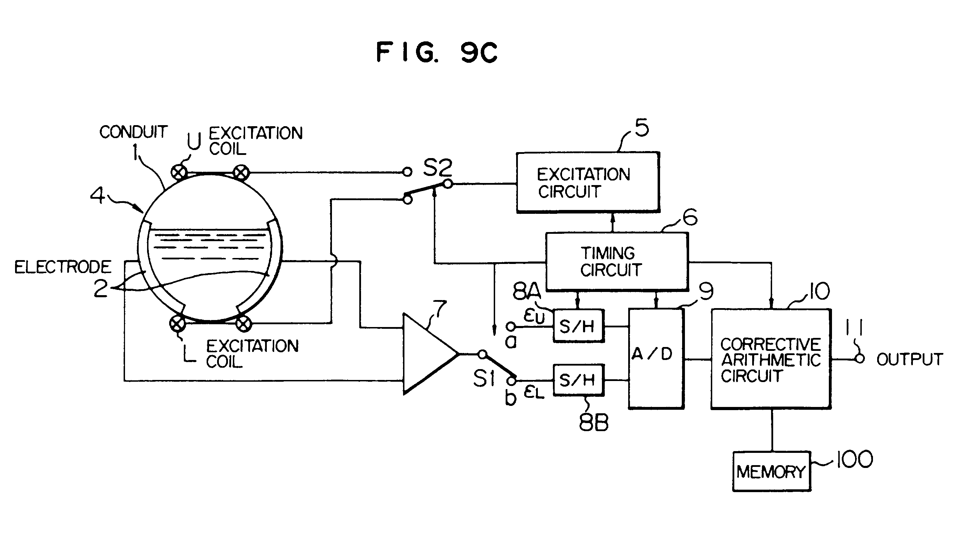

Fig. 9A is a front view of a flow detector, Fig. 9B is a section taken along the line A-A of Fig. 9A, and Fig. 9C is a block diagram of a flow meter as an embodiment of the present invention;

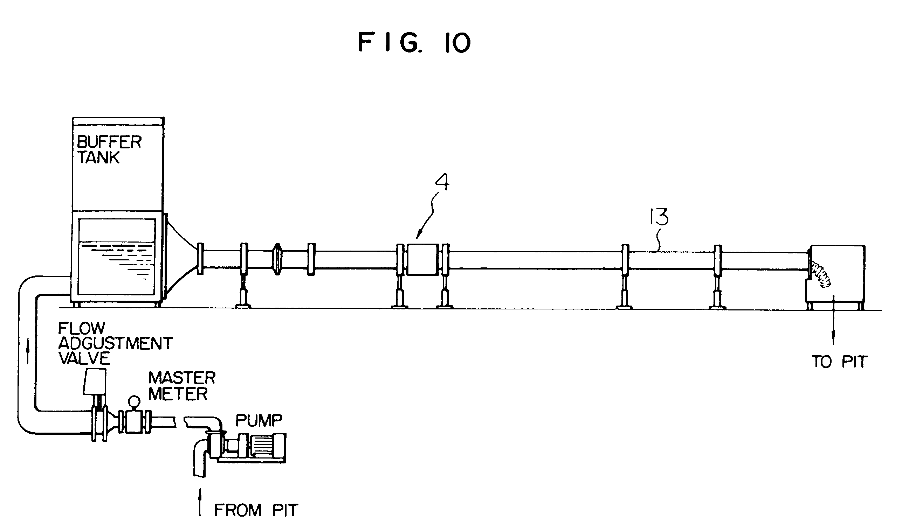

Fig. 10 is a schematic view of a water passing equipment;

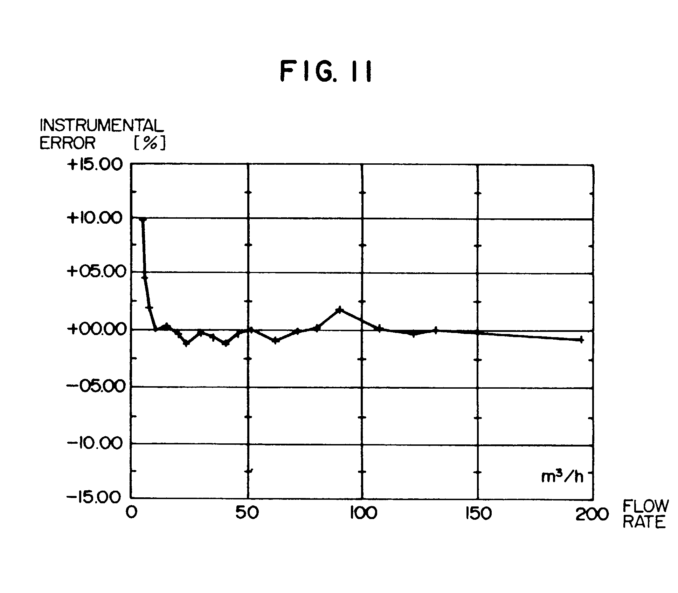

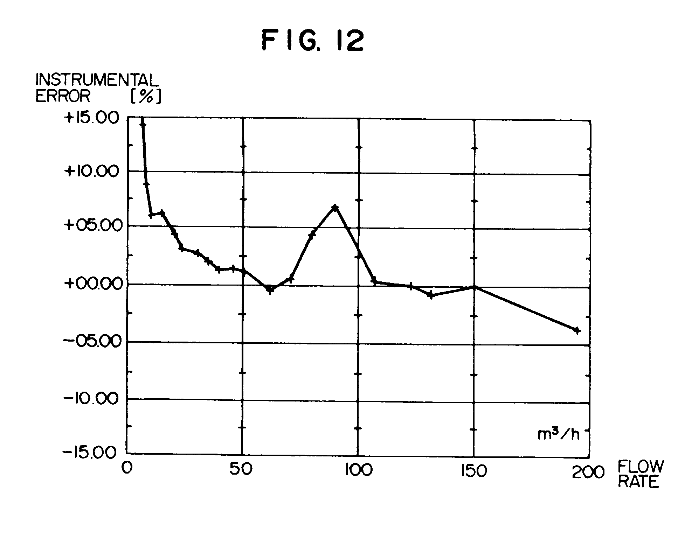

Figs. 11 and 12 are graphs of instrumental error;

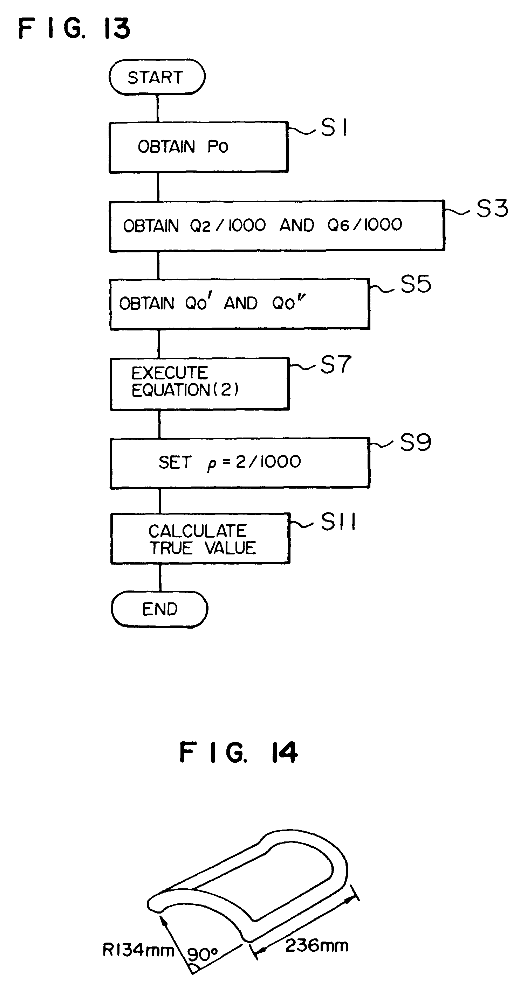

Fig. 13 is a flow chart showing a process in the embodiment of the invention; and

Fig. 14 is a perspective view of a coil used in the embodiment.

A flow detector 4 as shown in Figs. 9A and 9B is produced by way of trial, and an electromagnetic flow meter for water in a not-full state as shown in the block diagram of Fig. 9C is formed. Data of curves corresponding to Figs. 5 and 6 are sampled in advance for a pipe line 13 with its gradient set to 2/1000 and 6/1000 by using a water passing equipment shown in Fig. 10, and the sampled data are stored in a memory 100.

In Fig. 9C, members the same as those in Fig. 1 are correspondingly referenced and the description is partly omitted.

Fig. 11 is a graph of instrumental error in the case where a corrective arithmetic operation is performed by providing, for use as reference curves, curves measured at current gradients 2/1000 and 6/1000 and selecting, by the method of the invention, the curves measured at the gradient that is judged to be the closer approximation to the unknown gradient of the conduit. The real gradient of the conduit which was the subject of the measurement was 0/1000. The instrumental error is expressed in % as

100 x (measured value - true value)/true value.

The true value is obtained by a reference flow meter.

Fig. 12 shows instrumental error in the case where the flow rate is measured by reference to curves corresponding to Figs. 5 and 6 preliminarily measured at the gradient 6/1000. The instrumental error in Fig. 12 is relatively large because the difference between the gradient 6/1000 used at the time of sampling the reference curve data and the gradient 0/1000 at the time of the measurement is large.

The effect of the invention will becomes clearer from comparison between Figs. 11 and 12. The measurement accuracy can be improved more greatly by increasing the number and range of the reference curves.

The operation of the apparatus in this embodiment is shown in the flow chart of Fig. 13.

In a step S1, $P_0 = \varepsilon_{L0}/\varepsilon_{U0}$ is obtained by the output voltages $\varepsilon_{U0}$ and $\varepsilon_{L0}$ of the amplifier 1, that is, by the ratio of the lower coil output to the upper coil output. The calculation of the ratio is performed by the corrective arithmetic circuit 10. A CPU for exclusive use is used as the circuit 10.

Then, in a step S3, the circuit 10 reads the relations of Fig. 5 at the gradients 2/1000 and 6/1000 from the memory 100, obtains flow rates $Q_{2/1000}$ and $Q_{6/1000}$ at the respective gradients correspondingly to $P_0$ and stores the flow rates in registers.

In a step S5, the circuit 10 reads the relations of Fig. 6 at the respective gradients from the memory 100, obtains provisional real flow rates Q'(2/1000) and Q" (6/1000) by using the equation 1 and stores the provisional real flow rates in registers.

In a step S7, the equation (2) is executed by using the values obtained in the steps S3 and S5. As a result, the true gradient $\rho$ is found as about 0/1000.

Accordingly, in a step 9, the gradient 2/1000 more nearly approximating to the true gradient $\rho$ is selected. In a step S11, the real flow rate $Q_0$ is calculated by using the relations of Figs. 5 and 6 at the gradient 2/1000. In this embodiment, the real flow rate is as follows.

$$Q_0 = Q'(2/1000)$$

Although the above-mentioned embodiment has shown the case where two gradients are preliminarily obtained and used as the relations of Figs. 5 and 6, a larger number of data may be preliminarily obtained to improve the measurement accuracy further. For example, data may be obtained preliminarily at gradient intervals of 1/1000.

It is preferable that a gradient difference of about 1/1000 to about 10/1000 is given to the gradients $\alpha$ and $\beta$ used for calculating the true gradient.

The inner diameter of the pipe line in this embodiment is 240 mm.

The electrodes 2 have a width of 40 mm in the direction of flow, an opening angle of 90° and a thickness of 2 mm.

The form and size of the upper and lower coils are shown in Fig. 14.

It should be added that the coils as used are each composed of a winding of 1300 turns.

Because the electromagnetic flow meter for water in a not-full state according to the present invention is formed as described above, an accurate flow rate can be obtained by a corrective arithmetic operation to correct the influence of the pipe line gradient. Accordingly, the flow meter contributes to an improvement in accuracy of the electromagnetic flow meter for water in a not-full state.

Because the measurement error caused by the gradient difference is reduced, the range of gradients at which the pipe line may be mounted can be widened while keeping the accuracy within a certain range.

**Claims**

1. An electromagnetic flowmeter for measuring flow rate of a fluid not completely filling a conduit, comprising: coils (U,L) mounted above and below the measuring conduit (1) for generating a magnetic field across the conduit; means (5,S2) for selectively energising the upper coil (U) or the lower coil (L); sensor means comprising a pair of electrodes (2) arranged to sense the induced voltage across the conduit caused by the passage of the fluid through the magnetic field; and processing means (9,10,100) comprising means arranged:

(a) to store (100) a first relationship determined in advance between a ratio $\mathbf{P}$ of the outputs of the sensor means when the upper and lower coils are respectively energised and the flow rate $\mathbf{Q}$ of the fluid, for each of a plurality of known gradients $(\alpha,\beta...)$;

(b) to store a second relationship determined in advance between the sensitivity $\mathbf{k}$, defined as a ratio of the output of the sensor means when the upper coil is energised to the flow rate $\mathbf{Q}$ in the conduit, and the flow $(\alpha,\beta...)$; rate $\mathbf{Q}$, for each of the plurality of known gradients

(c) to receive signals $\varepsilon_{U0}$, $\varepsilon_{L0}$ from the sensor means (5,S2);

(d) to calculate (S1 to S9) from the received signals $\varepsilon_{U0}$ and $\varepsilon_{L0}$ and the stored first and second relationships the actual gradient of the conduit; and

(e) to calculate a flow rate by using the calculated gradient in the stored relationships.

2. An electromagnetic flowmeter according to claim 1, comprising means arranged:

(f) to calculate (S1) a measurement ratio $(P_0)$ between the signals $\varepsilon_{U0}$ and $\varepsilon_{L0}$;

(g) to read (S3) said calculated measurement ratio $(P_0)$ into the stored first relationship to calculate flow rates $\mathbf{Q_{2/1000}}$, $\mathbf{Q_{6/1000}}$ for the fluid in the measuring conduit for two of the said known gradients;

(h) to read (S5) said calculated flow rates $\mathbf{Q_{2/1000}}$, $\mathbf{Q_{6/1000}}$ into the stored second relationship to calculate a provisional real flow rate (Q', Q") in said measuring conduit for each of said two gradients;

(i) to determine (S7) a real gradient $(\rho)$ for the measuring conduit in accordance with the calculated flow rates and provisional real flow rates determined in steps

(g) and (h);

(j) to select (S9) a gradient that approximates to the determined real gradient $(\rho)$; and

(k) to repeat (S11) steps (g) and (h) using the said selected gradient to calculate a real flow rate.

3. An electromagnetic flowmeter according to claim 2, comprising means arranged to determine the real gradient $(\rho)$ in step (i) in accordance with the equation:

$$\rho = \frac{Q\beta_0 - Q_0''}{Q\beta_0 - Q\alpha_0 + Q_0' - Q_0''} \alpha + \frac{Q_0' - Q\alpha_0}{Q\beta_0 - Q\alpha_0 + Q_0' - Q_0''} \beta$$

4. An electromagnetic flowmeter according to claim 2 or claim 3, comprising means arranged to select as the gradient in step (j) the known gradient $(\alpha,\beta)$ closest to the real gradient $(\rho)$.

5. A method of measuring flow rate of a fluid not completely filling a conduit, using an electromagnetic flowmeter comprising: coils (U,L) mounted above and below the measuring conduit (1) for generating a magnetic field across the conduit; means (5,S2) for selectively energising the upper coil (U) or the lower coil (L); sensor means comprising a pair of electrodes (2) arranged to sense the induced voltage across the conduit caused by the passage of the fluid through the magnetic field; the method comprising the steps of:

(a) storing (100) a first relationship determined in advance between a ratio $\mathbf{P}$ of the outputs of the sensor means when the upper and lower coils are respectively energised and the flow rate $\mathbf{Q}$ of the fluid, for each of a plurality of known gradients $(\alpha,\beta...)$;

(b) storing a second relationship determined in advance between the sensitivity $\mathbf{k}$, defined as a ratio of the output of the sensor means when the upper coil is energised to the flow rate $\mathbf{Q}$ in the conduit, and the flow rate $\mathbf{Q}$, for each of the plurality of known gradients $(\alpha,\beta...)$;

(c) receiving signals $\varepsilon_{U0}$, $\varepsilon_{L0}$ from the sensor means (5,S2);

(d) calculating (S1 to S9) from the received signals $\varepsilon_{U0}$ and $\varepsilon_{L0}$ and the stored first and second relationships the actual gradient of the conduit; and

(e) calculating a flow rate by using the calculated gradient in the stored relationships.

6. A method according to claim 5, comprising the steps of:

(f) calculating (S1) a measurement ratio $(P_0)$ between the signals $\varepsilon_{U0}$ and $\varepsilon_{L0}$;

(g) reading (S3) said calculated measurement ratio $(P_0)$ into the stored first relationship to calculate flow rates $\mathbf{Q_{2/1000}}$, $\mathbf{Q_{6/1000}}$ for the fluid in the measuring conduit for two of the said known gradients;

(h) reading (S5) said calculated flow rates $\mathbf{Q_{2/1000}}$, $\mathbf{Q_{6/1000}}$ into the stored second relationship to calculate a provisional real flow rate (Q', Q") in said measuring conduit for each of said two gradients;

(i) determining (S7) a real gradient $(\rho)$ for the

measuring conduit in accordance with the calculated flow rates and provisional real flow rates determined in steps (g) and (h);

(j) selecting (S9) a gradient that approximates to the determined real gradient ($\rho$); and

(k) repeating (S11) steps (g) and (h) using the said selected gradient to calculate a real flow rate.

7. A method according to claim 6, wherein in step (i) the real gradient ($\rho$) is determined in accordance with the equation:

$$\rho = \frac{Q\beta_0 - Q_0''}{Q\beta_0 - Q\alpha_0 + Q_0' - Q_0''} \; \alpha \; + \; \frac{Q_0' - Q\alpha_0}{Q\beta_0 - Q\alpha_0 + Q_0' - Q_0''} \; \beta$$

8. A method according to claim 6 or claim 7, wherein in step (j) the gradient selected is the known gradient ($\alpha, \beta$) closest to the real gradient ($\rho$).

**Patentansprüche**

1. Elektromagnetischer Strömungsmesser zum Messen der Strömungsrate eines Fluids, das eine Leitung nicht vollständig füllt, umfassend: Spulen (U, L), die oberhalb und unterhalb der Meßleitung (1) zum Erzeugen eines Magnetfelds quer über der Leitung angebracht sind; ein Mittel (5, S2) zum wahlweisen Erregen der oberen Spule (U) oder der unteren Spule (L); ein Sensormittel, das ein Paar Elektroden (2) umfaßt, die zum Abfühlen der quer über der Leitung induzierten Spannung, welche durch den Durchgang des Fluids durch das Magnetfeld bewirkt wird, angeordnet sind; und Verarbeitungsmittel (9, 10, 100), umfassend Mittel, die angeordnet bzw. eingerichtet sind:

(a) zum Speichern (100) einer im voraus bestimmten ersten Beziehung zwischen einem Verhältnis P der Ausgangsgrößen des Sensormittels, wenn die obere und untere Spule jeweils erregt sind, und der Strömungsrate Q des Fluids für jeden aus einer Mehrzahl von bekannten Gradienten ($\alpha, \beta$ ...) ;

(b) zum Speichern einer im voraus bestimmten zweiten Beziehung zwischen der Empfindlichkeit k, die als ein Verhältnis der Ausgangsgröße des Sensormittels, wenn die obere Spule erregt ist, zu der Strömungsrate Q in der Leitung definiert ist, und der Strömungsrate Q, für jeden aus der Mehrzahl von bekannten Gradienten ($\alpha, \beta$ ...) ;

(c) zum Empfangen von Signalen $\varepsilon_{U0}$, $\varepsilon_{L0}$ von dem Sensormittel (5, S2) ;

(d) zum Berechnen (S1 bis S9) des aktuellen Gradienten der Leitung aus den empfangenen Signalen $\varepsilon_{U0}$ und $\varepsilon_{L0}$ und der gespeicherten ersten und zweiten Beziehung; und

(e) zum Berechnen einer Strömungsrate unter Verwendung des berechneten Gradienten in den gespeicherten Beziehungen.

2. Elektromagnetischer Strömungsmesser gemäß Anspruch 1, umfassend Mittel, die angeordnet bzw. eingerichtet sind:

(f) zum Berechnen (S1) eines Meßverhältnisses ($P_0$) zwischen den Signalen $\varepsilon_{U0}$ und $\varepsilon_{L0}$;

(g) zum Einlesen (S3) des berechneten Meßverhältnisses ($P_0$) in die gespeicherte erste Beziehung, um Strömungsraten $Q_{2/1000}$, $Q_{6/1000}$, für das Fluid in der Meßleitung für zwei der genannten bekannten Gradienten zu berechnen;

(h) zum Einlesen (S5) der berechneten Strömungsraten $Q_{2/1000}$, $Q_{6/1000}$ in die gespeicherte zweite Beziehung, um eine vorläufige reale Strömungsrate (Q', Q") in der Meßleitung für jeden der genannten beiden Gradienten zu berechnen;

(i) zum Bestimmen (S7) eines realen Gradienten ($\rho$) für die Meßleitung gemäß den berechneten Strömungsraten und den vorläufigen realen Strömungraten, die in den Schritten (g) und (h) bestimmt worden sind;

(j) zum Wählen (S9) eines Gradienten, der den bestimmten realen Gradienten ($\rho$) approximiert; und

(k) zum Wiederholen (S11) der Schritte (g) und (h) unter Verwendung des gewählten Gradienten, um eine reale Strömungsrate zu berechnen.

3. Elektromagnetischer Strömungsmesser gemäß Anspruch 2, umfassend ein Mittel, das zum Bestimmen des realen Gradienten ($\rho$) im Schritt (i) gemäß der folgenden Gleichung angeordnet bzw. eingerichtet ist:

$$\rho = \frac{Q\beta_0 - Q_0''}{Q\beta_0 - Q\alpha_0 + Q_0' - Q_0''} \; \alpha \; + \; \frac{Q_0' - Q\alpha_0}{Q\beta_0 - Q\alpha_0 + Q_0' - Q_0''} \; \beta$$

4. Elektromagnetischer Strömungsmesser gemäß Anspruch 2 oder Anspruch 3, umfassend ein Mittel, das dazu angeordnet bzw. eingerichtet ist, als den Gradienten im Schritt (j) den bekannten Gradienten ($\alpha, \beta$) zu wählen, der dem realen Gradienten ($\rho$) am nächsten ist.

5. Verfahren zum Messen der Strömungsrate eines Fluids, das eine Leitung nicht vollständig füllt, unter Verwendung eines elektromagnetischen Strömungsmessers, der folgendes umfaßt: Spulen (U, L), die oberhalb und unterhalb der Meßleitung (1) zum Erzeugen eines Magnetfelds quer über der Leitung angebracht sind; ein Mittel (5, S2) zum wahlweisen Erregen der oberen Spule (U) oder der unteren Spule (L) ; ein Sensormittel, das ein Paar Elektroden (2) umfaßt, die zum Abfühlen der induzierten Spannung quer über der Leitung, welche durch den Durchgang des Fluids durch das Magnetfeld bewirkt wird, angeordnet sind; wobei das Verfahren die folgenden Schritte umfaßt:

(a) Speichern (100) einer im voraus bestimmten ersten Beziehung zwischen einem Verhältnis P der Ausgangsgrößen des Sensormittels, wenn die obere und untere Spule jeweils erregt sind, und der Strömungsrate Q des Fluids für jeden aus einer Mehrzahl von bekannten Gradienten ($\alpha$, $\beta$ ...);

(b) Speichern einer im voraus bestimmten zweiten Beziehung zwischen der Empfindlichkeit k, die als ein Verhältnis der Ausgangsgröße des Sensormittels, wenn die obere Spule erregt ist, zu der Strömungsrate Q in der Leitung definiert ist, und der Strömungsrate Q, für jeden aus der Mehrzahl von bekannten Gradienten ($\alpha$, $\beta$ ...) ;

(c) Empfangen von Signalen $\varepsilon_{U0}$, $\varepsilon_{L0}$ von dem Sensormittel (5, S2);

(d) Berechnen (S1 bis S9) des aktuellen Gradienten der Leitung aus den empfangenen Signalen $\varepsilon_{U0}$ und $\varepsilon_{L0}$ und der gespeicherten ersten und zweiten Beziehung; und

(e) Berechnen einer Strömungsrate unter Verwendung des berechneten Gradienten in den gespeicherten Beziehungen.

6. Verfahren gemäß Anspruch 5, umfassend die folgenden Schritte:

(f) Berechnen (S1) eines Meßverhältnisses ($P_0$) zwischen den Signalen $\varepsilon_{U0}$ und $\varepsilon_{L0}$;

(g) Einlesen (S3) des berechneten Meßverhältnisses ($P_0$) in die gespeicherte erste Beziehung, um Strömungsraten $Q_{2/1000}$, $Q_{6/1000}$ für das Fluid in der Meßleitung für zwei der genannten bekannten Gradienten zu berechnen;

(h) Einlesen (S5) der berechneten Strömungsraten $Q_{2/1000}$, $Q_{6/1000}$ in die gespeicherte zweite Beziehung, um eine vorläufige reale Strömungsrate (Q', Q") in der Meßleitung für jeden der genannten beiden Gradienten zu berechnen;

(i) Bestimmen (S7) eines realen Gradienten (p) für die Meßleitung gemäß den berechneten Strömungsraten und den vorläufigen realen Strömungraten, die in den Schritten (g) und (h) bestimmt worden sind;

(j) Wählen (S9) eines Gradienten, der sich an den bestimmten realen Gradienten ($\rho$) annähert; und

(k) Wiederholen (S11) der Schritte (g) und (h) unter Verwendung des genannten gewählten Gradienten, um eine reale Strömungsrate zu berechnen.

7. Verfahren gemäß Anspruch 6, worin im Schritt (i) der reale Gradient ($\rho$) bestimmt wird gemäß der Gleichung

$$\rho = \frac{Q\beta_0 - Q_0''}{Q\beta_0 - Q\alpha_0 + Q_0' - Q_0''} \, \alpha + \frac{Q_0' - Q\alpha_0}{Q\beta_0 - Q\alpha_0 + Q_0' - Q_0''} \, \beta$$

8. Verfahren gemäß Anspruch 6 oder Anspruch 7, worin im Schritt (j) der gewählte Gradient der bekannte Gradient ($\alpha$, $\beta$) ist, der dem realen Gradienten ($\rho$) am nächsten ist.

## Revendications

1. Débitmètre électromagnétique destiné à mesurer le débit d'un fluide ne remplissant pas complètement une canalisation, comprenant : des bobines (U, L) montées au-dessus et au-dessous de la canalisation de mesure (1) afin de générer un champ magnétique à travers la canalisation ; des moyens (5, S2) pour exciter de manière sélective la bobine supérieure (U) ou la bobine inférieure (L) ; des moyens de détection comprenant deux électrodes (2) agencées pour détecter la tension induite dans la canalisation provoquée par le passage du fluide à travers le champ magnétique ; et des moyens de traitement (9, 10, 100) comprenant des moyens agencés pour :

(a) stocker (100) une première relation déterminée à l'avance entre un rapport P des sorties des moyens de détection quand les bobines supérieure et inférieure sont respectivement excitées et le débit Q du fluide, pour chacun d'une pluralité de gradients connus ($\alpha$, $\beta$...) ;

(b) stocker une seconde relation déterminée à l'avance entre la sensibilité k, définie comme un rapport de la sortie des moyens de détection, quand la bobine supérieure est excitée, sur le débit Q dans la canalisation, et le débit Q pour chacun de la pluralité de gradients connus ($\alpha$, $\beta$...) ;

(c) recevoir des signaux $\varepsilon_{U0}$, $\varepsilon_{L0}$ depuis les moyens de détection (5, S2) ;

(d) calculer (S1 à S9) à partir des signaux reçus $\varepsilon_{U0}$ et $\varepsilon_{L0}$ et des première et seconde relations stockées le gradient réel présent dans la canalisation ; et

(e) calculer un débit en utilisant le gradient calculé dans les relations stockées.

2. Débitmètre électromagnétique selon la revendication 1, comprenant des moyens agencés pour :

(f) calculer (S1) un rapport de mesure ($P_0$) entre les signaux $\varepsilon_{U0}$ et $\varepsilon_{L0}$ ;

(g) lire (S3) ledit rapport de mesure calculé ($P_0$) dans la première relation stockée afin de calculer les débits $Q_{2/1000}$, $Q_{6/1000}$ pour le fluide dans la canalisation de mesure pour deux desdits gradients connus ;

(h) lire (S5) lesdits débits calculés $Q_{2/1000}$, $Q_{6/1000}$ dans la seconde relation stockée afin de calculer un débit réel provisoire (Q', Q") dans ladite canalisation de mesure pour chacun desdits deux gradients ;

(i) déterminer (S7) un gradient réel ($\rho$) pour la canalisation de mesure conformément aux débits calculés et aux débits réels provisoires déterminés dans les étapes (g) et (h) ;

(j) sélectionner (S9) un gradient qui avoisine le gradient réel déterminé ($\rho$) ; et

(k) répéter (S11) les étapes (g) et (h) en utilisant ledit gradient choisi pour calculer un débit réel.

3. Débitmètre électromagnétique selon la revendication 2, comprenant des moyens pour déterminer le gradient réel ($\rho$) dans l'étape (i) conformément à l'équation :

$$\rho = \frac{Q\beta_0 - Q_0{}''}{Q\beta_0 - Q\alpha_0 + Q_0{}' - Q_0{}''}\ \alpha + \frac{Q_0{}' - Q\alpha_0}{Q\beta_0 - Q\alpha_0 + Q_0{}' - Q_0{}''}\ \beta$$

4. Débitmètre électromagnétique selon la revendication 2 ou la revendication 3, comprenant des moyens agencés pour sélectionner comme gradient dans l'étape (j) le gradient connu ($\alpha$, $\beta$) le plus proche du gradient réel ($\rho$).

5. Procédé de mesure du débit d'un fluide ne remplissant pas complètement une canalisation à l'aide d'un débitmètre électromagnétique comprenant : des bobines (U, L) montées au-dessus et au-dessous de la canalisation de mesure (1) afin de générer un champ magnétique à travers la canalisation ; des moyens (5, S2) pour exciter de manière sélective la bobine supérieure (U) ou la bobine inférieure (L) ; des moyens de détection comprenant deux électrodes (2) agencées pour détecter la tension induite dans la canalisation provoquée par le passage du fluide à travers le champ magnétique ; le procédé comprenant les étapes consistant à :

(a) stocker (100) une première relation déterminée à l'avance entre un rapport P des sorties des moyens de détection quand les bobines supérieure et inférieure sont respectivement excitées et le débit Q du fluide, pour chacun d'une pluralité de gradients connus ($\alpha$, $\beta$...) ;

(b) stocker une seconde relation déterminée à l'avance entre la sensibilité k, définie comme un rapport de la sortie des moyens de détection, quand la bobine supérieure est excitée, sur le débit Q dans la canalisation, et le débit Q pour chacun de la pluralité de gradients connus ($\alpha$, $\beta$...) ;

(c) recevoir des signaux $\varepsilon_{U0}$, $\varepsilon_{L0}$ depuis les moyens de détection (5, S2) ;

(d) calculer (S1 à S9) à partir des signaux reçus $\varepsilon_{U0}$ et $\varepsilon_{L0}$ et des première et seconde relations stockées le gradient réel présent dans la canalisation ; et

(e) calculer un débit en utilisant le gradient calculé dans les relations stockées.

6. Procédé selon la revendication 5, comprenant les étapes consistant à :

(f) calculer (S1) un rapport de mesure ($P_0$) entre les signaux $\varepsilon_{U0}$ et $\varepsilon_{L0}$ ;

(g) lire (S3) ledit rapport de mesure calculé ($P_0$) dans la première relation stockée afin de calculer les débits $Q_{2/1000}$, $Q_{6/1000}$ pour le fluide dans la canalisation de mesure pour deux desdits gradients connus ;

(h) lire (S5) lesdits débits calculés $Q_{2/1000}$, $Q_{6/1000}$ dans la seconde relation stockée afin de calculer un débit réel provisoire (Q', Q") dans ladite canalisation de mesure pour chacun desdits deux gradients ;

(i) déterminer (S7) un gradient réel ($\rho$) pour la canalisation de mesure conformément aux débits calculés et aux débits réels provisoires déterminés dans les étapes (g) et (h) ;

(j) sélectionner (S9) un gradient qui avoisine le gradient réel déterminé ($\rho$) ; et

(k) répéter (S11) les étapes (g) et (h) en utilisant ledit gradient choisi pour calculer un débit réel.

7. Procédé selon la revendication 6, dans lequel le gradient réel ($\rho$) est déterminé dans l'étape (i) conformément à l'équation :

$$\rho = \frac{Q\beta_0 - Q_0{}''}{Q\beta_0 - Q\alpha_0 + Q_0{}' - Q_0{}''}\ \alpha + \frac{Q_0{}' - Q\alpha_0}{Q\beta_0 - Q\alpha_0 + Q_0{}' - Q_0{}''}\ \beta$$

8. Procédé selon la revendication 6 ou la revendication 7, dans lequel à l'étape (j), le gradient choisi est le gradient connu ($\alpha$, $\beta$) le plus proche du gradient réel ($\rho$).

EP 0 555 493 B1

# FIG. 1

CONDUIT 1 · U EXCITATION COIL · 4 · ELECTRODE 2 · L EXCITATION COIL · 7 · S1 · a · b · $\varepsilon_U$ · $\varepsilon_L$ · 8A · S/H · 8B · S/H · 9 · A/D · S2 · EXCITATION CIRCUIT 5 · TIMING CIRCUIT 6 · CORRECTIVE ARITHMETIC CIRCUIT 10 · OUTPUT 11

# F I G. 2

# F I G. 3

# F I G. 4

# FIG. 5

# FIG. 6

## FIG. 7A

## FIG. 7B

## FIG. 7C

13

# F I G. 8A

# F I G. 8B

# F I G. 8C

# FIG. 9A

EXCITATION
COIL

U

A

CONDUIT

4

EXCITATION
COIL

L

A'

# FIG. 9B

EXCITATION
COIL

U

4

U

1 CONDUIT

2

EXCITATION
COIL

L

L

2

ELECTRODE

F I G. 9C

F I G. 10

BUFFER TANK

4

13

TO PIT

FLOW ADGUSTMENT VALVE

MASTER METER

PUMP

FROM PIT

# FIG. 11

# F I G. 12

# F I G. 13

START

OBTAIN Po — S1

OBTAIN Q2/1000 AND Q6/1000 — S3

OBTAIN Qo′ AND Qo″ — S5

EXECUTE EQUATION(2) — S7

SET $\rho = 2/1000$ — S9

CALCULATE TRUE VALUE — S11

END

# F I G. 14

R134mm  90°  236mm